# EUROPEAN PATENT SPECIFICATION

(11) **EP 4 567 290 B1**
(45) Date of publication and mention of the grant of the patent: **14.01.2026**
(21) Application number: 23215228.0
(22) Date of filing: 08.12.2023
(51) Int. Cl.: F16B 45/02

(54) **CARABINER**
KARABINER
MOUSQUETON

(43) Date of publication of application: 11.06.2025
(73) Proprietor: SKYLOTEC GmbH, 56566 Neuwied (DE)
(72) Inventor: BRIOSCHI, Gianluca, 20064, Gorgonzola (MI) (IT); GARELLO, Giovanni, 23851, Galbiate (LC) (IT); CANNAZZA, Fabio, 28100, Novara (NO) (IT)
(74) Representative: Michalski Hüttermann & Partner Patentanwälte mbB

(56) References cited:
- CH-A- 557 687
- FR-B1- 2 805 318

## Description

The invention relates to a carabiner comprising a frame with an opening, a lever pivotably coupled to the frame and a sleeve mounted movably on the lever.

The carabiner can be used in practice in climbing applications or other applications where an easily removable connection is needed. A user of the carabiner may want to insert a rope into the frame via the opening in order to make the carabiner surround the rope. The sleeve may be used to selectively secure the lever against pivoting relative to the frame. In known carabiners, the user may accidentally move the sleeve on the lever and/or pivot the lever.

CH 557 687 A describes a safety carabiner, particularly for mountaineering, enabling two elements such as, for example, a rope and a piton, two ropes, a stirrup and a piton, etc., to be firmly and easily connected or quickly separated. CH 557 687 A describes that the carabiner is characterized by the fact that it comprises a ring mounted adjustably in position on the closing index of the carabiner ring, this ring being provided with notches designed to engage on a lug, integral with said index, under the return effect of a spring, so that said ring, in the locking position of the karabiner, covers the free end of the index finger and the end of the ring onto which the index finger is folded, and, in the unlocking position of the karabiner, is held on the index finger, leaving the junction of the index finger and ring ends free.

It is therefore an object of the invention to provide solutions with respect to enhancing the carabiner in terms of safety. Particularly it is an object to avoid or reduce disadvantages of known solutions.

The object of the invention is solved by the features of the independent claim. Preferred implementations are detailed in the dependent claims, the description and the figures.

The object is solved by a carabiner, comprising
a frame having an engagement end and a pivoting end therebetween defining an opening;
a lever having a top end and a lever connection element, the lever pivotably coupled to the pivoting end and configured to be pivoted between an open and a closed position for the engagement end and top end to detachably engage;
a sleeve mounted movably on the lever and having a sleeve connection element corresponding to the lever connection element, wherein said connection elements are configured to move the sleeve along the lever sectionally between a first position and a second position, and said connection elements are disengaged in the second position; and
a mechanical member configured for applying a force to the sleeve for avoiding an involuntary movement of the sleeve, the force directed towards the second position;
wherein the sleeve is configured for preventing a pivoting movement of the lever around the pivoting end, especially in the second position, the sleeve surrounds at least a part of the top end in the second position.

Simply said, the object is particularly solved by a carabiner including at least one of: a frame, a lever pivotably coupled to the frame, and a sleeve mounted movably on the lever to selectively assume a top or second position which secures the lever against pivoting. Particularly, the sleeve is configured to be moved along the lever upon rotating the sleeve on the lever only in a section that is: away from the second position and/or not including the second position.

Particularly, the present invention suggests a carabiner with a lever that has a sleeve that can engage or interact with the lever via connection elements, e.g. threads and/or engaging protrusion(s) and/or groove(s) or the like. When the sleeve is in a second position, the carabiner may be secured in that the sleeve surrounds the frame so that the carabiner is closed and the lever cannot be pivoted. In this position, the sleeve blocks the lever. It is an idea of the invention that the connection element of the sleeve is not engaged with the connection element of the lever when the sleeve is in the second position so that a rotation of the sleeve would not unsecure the lever relative to the frame. Further, a mechanical member pushes the sleeve towards the second position so that the sleeve cannot accidentally (involuntarily) fall down or make the connection elements accidentally engage or interact again. Rather, the user may need to push down, and e.g. rotate, the sleeve to make said connection elements engage again. The invention particularly provides that the sleeve can be moved along the lever, wherein only in a section along the range of movement the threads between sleeve and lever engage.

The present invention deals with the fact that in some cases external forces caused by external elements like wind, vibrations, rope rubbing against the carabiner itself, are the main character of the accidental opening of the sleeve. Here, the invention provides approaches to improve the use when external forces occur.

By means of the invention and by means of aspects described in the present application, it is advantageously realized that the carabiner is easily secured in the closed position and it is more unlikely that the carabiner can be opened accidentally. This is because the sleeve can only be moved out of the second position when the user forcibly brings threads into engagement by way of pushing the sleeve downwards against the force of the mechanical member. The invention increases safety and is easily to implement, e.g. by way of limiting the extensions of threads along the lever.

The sleeve may have at least one point of contact, especially in the form of at least one inner protrusion, particularly an upper and/or a lower one. The at least one point of contact may have a first point of contact and/or a top point of contact. The at least one point of contact may have a second point of contact and/or a low point of contact.

A carabiner or karabiner, sometimes biner or crab, is also known as clip or climbing clip. A carabiner is a type of shackle, a metal loop with a typically spring-loaded gate or opening used to reversibly connect components. Typically a carabiner is applied in safety-critical systems, e.g. where persons must be secured due to a certain height involved which persons could theoretically fall down.

A carabiner can be used in rope-intensive activities such as climbing, fall arrest systems, arboriculture, caving, sailing, hot-air ballooning, rope rescue, construction, industrial rope work, window cleaning, whitewater rescue, and/or acrobatics. Accordingly, a use of the carabiner in one or more of said applications/activities is disclosed as a possible solution the invention provides.

The frame typically comprises a bent or wound base part, e.g. substantially in the shape of a loop or ring. The frame is typically a monolithically formed piece made of metal. The frame typically has two ends defining the opening or gate. The engagement end is configured for engagement with the lever. The pivoting end is configured for a pivotable coupling with the lever, especially so that the lever can selectively engage with the engagement end (i.e. can be pivoted for the carabiner to be either open or closed). Typically, the lever is configured for pivoting inwardly at the frame. When the lever is closed (closed position), the carabiner makes up an essentially continuously closed ring. When the lever is open (open position), the closed position is not present and/or the lever is pivoted away from the engagement end to provide a distance between the top end (lever) and the engagement end (frame). When closed, the top end may engage with the engagement end in several directions.

The lever typically comprises an elongated base part, e.g. substantially in the shape of a pin or bolt. The lever can be understood as an elongated component. The lever is typically rigid. The lever typically supports and/or holds the sleeve. The lever may comprise at least sectionally a cylindrical surface. The lever may as well be bent and/or comprise a curved surface. The lever and the frame may be designed for engagement in the pivoting end and defining a pivoting axis at the pivoting end. The lever has a connection element, for example a thread or external thread.

The sleeve or bush may be a turned part. The sleeve may comprise an at least substantially rotationally symmetric shape. Typically, the sleeve has an opening for the lever to penetrate the sleeve. The sleeve may comprise a circumferentially closed shape. The sleeve may be configured for rotation on the lever. The sleeve has a connection element, for example a thread or internal thread. Depending on the position of the sleeve on the lever, the connection element of the sleeve may engage and/or interact with the connection element of the lever. Especially, the engagement is present when the sleeve is away from the second position to avoid that the sleeve can move along the lever via rotation when it is in the second position. It may be that the threads engage when the sleeve is in the first position; however, it may be that the threads do not engage when the sleeve is in the first position. However, it is typically provided that the threads engage somewhere between the first position and the second position of the sleeve on the lever.

A thread as mentioned herein, especially the external thread and/or internal thread, is typically understood as a metric thread and/or a thread-like geometrical shape configured for mechanical engagement. Corresponding threads are typically configured with a similar size in terms of diameter, pitch and/or length.

The sleeve being movable on the lever relates to the fact that the sleeve can shifted along the lever and/or can be rotated around the lever. When the connection elements engage and/or interact, the sleeve may be moved along the lever only as a function of the rotation of the sleeve. When said threads are disengaged, the sleeve may be moved along the lever independent from the rotation of the sleeve.

The mechanical member can be or comprise an energy storage means, for example a spring. The mechanical member can be configured for storing mechanical or potential energy. The mechanical member can be in the form of at least one, two, or more magnet(s). For example, magnets arranged to provide a force of attraction and/or repel may be able to store energy and/or provide the force to the sleeve.

The spring is typically in the form of a coil spring or spiral spring. The spring is typically made of steel. The spring may be shaped with a substantially constant diameter. The spring may be made of a would wire with a substantially constant wire diameter. The spring may be configured for surrounding the lever and/or for accommodation in the sleeve. The spring is typically arranged between the sleeve and the lever. Typically, the spring is covered by the sleeve for protection of the spring.

Generally, the carabiner can comprise at least one magnet for providing an arrest function, e.g. with respect to the position of the sleeve on the lever and/or the lever on the frame.

The at least one point of contact, e.g. the first point of contact of the sleeve and/or upper inner protrusion, may be configured to bear against the mechanical member. For example, it may be that the sleeve sits on the mechanical member, especially via the first point of contact, especially in all positions it can assume relative to the lever. The at least one point of contact may be configured to bear against the effects of the force created by the mechanical member. It may as well be that the sleeve not necessarily sits on the mechanical member, especially the first point of contact does not necessarily sit on the mechanical member, in the second position. The first point of contact may be a shoulder, especially a circumferential shoulder. The first point of contact may extend radially inwards and/or in a circumferential direction at least sectionally. There may be a plurality of first point s of contact. The first point of contact may beneficially center the sleeve relative to the lever and make the carabiner relatively compact.

The sleeve may have at least one point of contact of which the upper or first point of contact and/or the lower or second point of contact is configured to stop along the lever on the lever in the direction from the lower or first towards the top or second position. For example, the lever may have means mechanically corresponding to the at least one protrusion of the sleeve for the sleeve to stop on the lever. Said means may be embodied in a lower side of the lever connection element / the connection element of the lever or may be embodied in a geometrical design of the lever, e.g. the lever having a corresponding stop element, e.g. in a direction towards the top end and away from the pivoting end above the connection element / the connection element of the lever. This secures the sleeve on the lever in an easy way.

The lever may have at least one point of contact or lever point of contact, especially in the form of at least one outer protrusion. The at least one point of contact of the lever, particularly the at least one outer protrusion, may be configured to cooperate with the first point of contact. The at least one lever point of contact may be formed in the top end or between the top end and the pivoting end. The at least one lever point of contact may be a shoulder, especially a circumferential shoulder. The at least one lever point of contact may extend radially outwards and/or in a circumferential direction at least sectionally. There may be a plurality of at lever points of contact. The at least one lever point of contact may beneficially center the sleeve relative to the lever and make the carabiner relatively compact. The at least one lever point of contact may be arranged in a direction towards the top end and away from the pivoting end above the at least one point of contact. In the sense of mechanical cooperation, the at least one point of contact may be configured to stop on the at least one lever point of contact. This provides a compact carabiner which is easy to use.

The first point of contact may be arranged in a first region or an upper region of the sleeve. In other words, the first point of contact may be arranged on or near one end of the sleeve, considering that the sleeve typically has two opposite ends. This provides room for the mechanical member to be accommodated along the sleeve in order to protect the mechanical member. This also provides mechanical stability to the cooperation between the lever and sleeve and prevents jamming of the sleeve.

The at least one protrusion, especially the at least one point of contact and/or the at least one lever point of contact, may be monolithically formed on the sleeve and/or the lever. The sleeve/lever may at least partially be machined via turning and/or milling. In this way, the sleeve/lever is/are easy to be machined. Further, the respective protrusion is robust in that it cannot break easily. This enhances safety.

The second point of contact may be arranged in a second region or lower region of the sleeve. The second point of contact may be designed in a similar fashion (with respect to individual features described herein) like the first point of contact or the at least one protrusion described herein. The second point of contact may be arranged on or near an end of the sleeve, considering that the sleeve typically has two opposite ends. This provides room for the mechanical member to be accommodated along the sleeve in order to protect the mechanical member. This also provides mechanical stability to the cooperation between the lever and sleeve and prevents jamming of the sleeve.

The mechanical member may be configured to provide a force to the sleeve as a function of gravitation. For example, the gravitation may serve to push the sleeve automatically towards the second position. The mechanical member may be configured to provide a force to the sleeve based on energy stored in the mechanical member. Especially, the mechanical member may be able to store energy, e.g. from a user input, e.g. which user moves the sleeve away from the second position.

The mechanical member may be integrated in the sleeve. For example, the mechanical member may be formed with the sleeve. The mechanical member and the sleeve may be provided as an assembly and/or as a common part. The mechanical member and the sleeve may particularly provided as a plastic assembly, especially wherein the mechanical member is a spring means or spring formed with the sleeve. Particularly, the sleeve could be a plastic sleeve especially including the mechanical member.

The sleeve may have a ring element to form the at least one point of contact. The ring element may be inserted into a groove of a raw part forming the sleeve. The ring element and the sleeve may make a form with with each other effective at least along the lever.

The lever may have a shoulder arranged between the lever connection element and the top end. Alternatively or additionally, the lever may have a/the shoulder arranged between the lever connection element and the top end. The mechanical member may bear against the shoulder and/or may be configured to bear against the shoulder. The shoulder may be arranged adjacent to the lever connection element or the connection element of the lever. The shoulder may be arranged atop / axially adjacent to the lever connection element for the mechanical member to be arranged atop / axially adjacent to the lever connection element. This provides a compact design with a robust enclosure of the mechanical member.

The engagement end may have an especially tapered and/or chamfered tip. The engagement end may comprise a bulge and/or thickening for engagement with the lever. This provides enhanced engagement and reduced risk for injury during use.

The top end may have a recess and is configured to surround the engagement end, especially the tip, from at least two especially opposite sides in the closed position.

Thus, the lever may not be pushed away from the engagement end to the side or oblique to the lever.

The recess may be tapered and/or chamfered substantially corresponding to the form of the engagement end. The top end may be designed to engage with the bulge and/or thickening to make a form fit along the lever with the engagement end. This is helpful for cases where the carabiner is overloaded and is subject to severe deformation.

The sleeve may have a substantially conical and/or tapered inner surface and may be configured for surrounding the engagement end. An upper end of the sleeve facing the top end of the lever may thereby be designed for a smooth engagement with the engagement end of the frame. The sleeve may be shaped sectionally substantially as a funnel to easily make be moved to surround the engagement end and enable an automatic positioning / centering of the lever relative to the frame when securing the carabiner (moving the sleeve to the second position)

The sleeve may have a rippling on its outside. For example, the sleeve may have small grooves and/or indentations on the outside, for example with a depth in the range between 0,1 and 1 mm for providing a better grip to the fingers of the user.

The lever may be spring-loaded relative to the frame to automatically pivot from the open towards the closed position. For example, the lever may automatically close when not actively pushed manually. A mechanical member and/or spring may be integrated in the frame in the pivoting end, for example a leaf spring.

Optionally, the frame, the lever and/or the sleeve is/are made of an aluminum alloy and especially is/are anodized. The sleeve may be provided in a different color relative to the lever in order to easily make visible the position of the sleeve on the lever. Such a color may be realized by anodizing and/or painting.

There may be a bolt and/or a rivet serving to pivotably couple lever and frame, which may be made of a metal different to aluminum in order to provide wear resistance; the metal different to aluminum may be steel. The mechanical member may be made of a similar material, especially steel.

The term 'or' may be replaced by 'and/or' throughout the present disclosure. As such, where 'or' is used, it is not necessarily meant that merely alternatives are named.

These and other aspects of the invention will be apparent from and elucidated with reference to the implementations described hereinafter.

In the drawings:
Fig. 1 shows a carabiner with a frame, with a lever mounted pivotably on the frame, and with a sleeve mounted movably on the lever and the sleeve in a second position, in a perspective side view;
Fig. 2 shows the carabiner of Fig. 1 in a perspective view of a detail, where the sleeve is moved to a first position has a cutout for illustrating that a mechanical member is held inside the sleeve and that pushes the sleeve on the lever towards a second position;
Fig. 3 shows a further embodiment of a carabiner in a sectional view; and
Fig. 4 shows another embodiment of a carabiner in a sectional view.

The description contains procedural or methodical aspects upon describing structural features of the invention; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

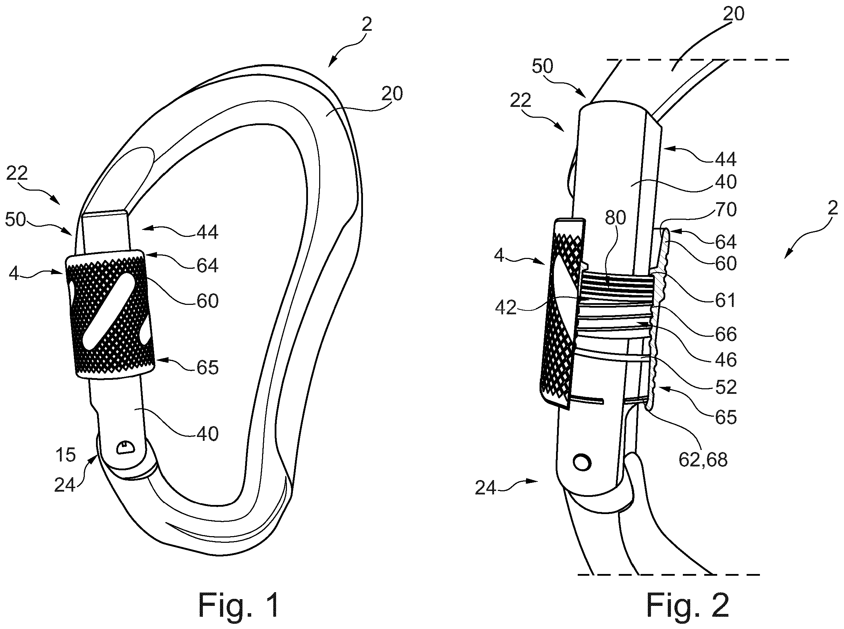

Fig. 1 and 2 shows a carabiner 2 comprising a frame 20 having an engagement end 22 and a pivoting end 24. The ends 22 and 24 define an opening 4 therebetween.

The carabiner 2 furthermore comprises a lever 40 having a top end 44 and an external thread as a lever connection element 46. The lever 40 is pivotably coupled to the pivoting end 24 via a bolt and/or rivet made of steel. The lever 40 is configured to be pivoted between an open and a closed position for the engagement end 22 and top end 44 to detachably engage. In Fig. 1 and 2, the lever 40 is in the closed position. When the lever 40 is pivoted in a clockwise direction based on the view shown in Fig. 1 and 2, the lever 40 may assume the open position.

The carabiner 2 furthermore comprises a sleeve 60 mounted movably on the lever 40 along the lever 40. The sleeve 60 has an internal thread as a sleeve connection element 66 corresponding to the lever connection element 46. The threads 46 and 66 are configured to move the sleeve 60 along the lever 40 sectionally between a first position and a second position.

In Fig. 1, the sleeve 60 is in the second position. In this position, the threads 46 and 66 are disengaged to prohibit that rotating the sleeve 60 would move the sleeve downwards and/or along the lever 40.

In Fig. 2, the sleeve 60 is in the first position. In this position, the threads 46 and 66 are engaged and particularly fix the sleeve 60 against an axial movement, unless the sleeve 60 is rotated.

In both Fig. 1 and 2, particularly in all positions the sleeve 60 may assume, the sleeve 60 is spring-loaded in a direction along the lever 60 and towards the second position. This includes that in the second position, e.g. as shown in Fig. 1, the sleeve 60 is spring-loaded in the same direction, for example to hold the sleeve 60 in place and reduce play. The spring-load is provided by means of a mechanical member 80, especially a spring, particularly coil spring.

Particularly, the carabiner 2 comprises the mechanical member 80 which is configured to push the sleeve 60 towards the second position. In the second position the mechanical member 80 pushes the sleeve 60 constantly to make that the sleeve 60 stays in the second position.

The mechanical member 80 is configured to apply a force to the sleeve 60 for avoiding involuntary movement of the sleeve 60, wherein the force is directed towards the second position.

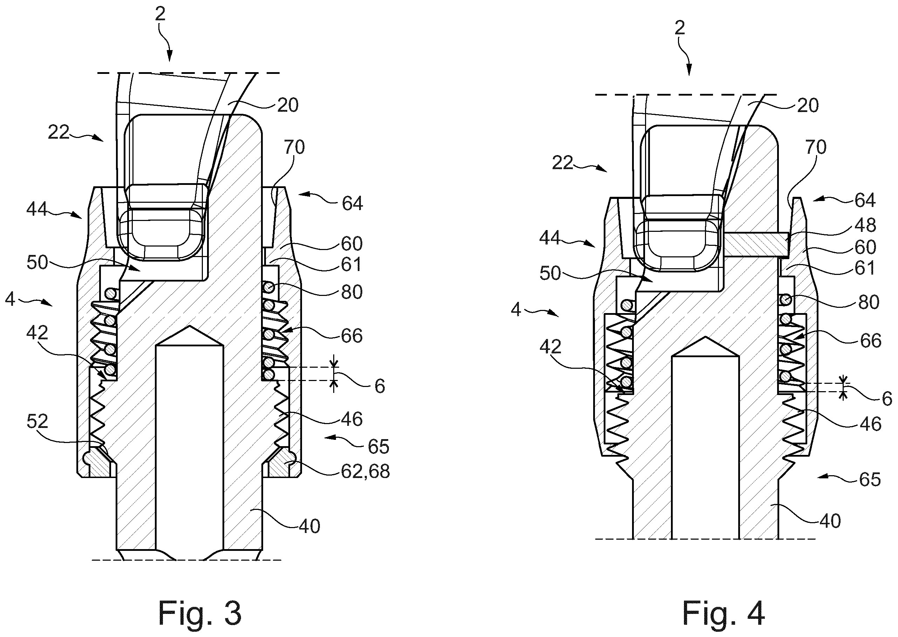

The mechanical member 80 holds the threads 46 and 66 at a distance 6 to each other which is given in Fig. 1 and which is particularly depicted in Figs. 3 and 4.

In the second position, as shown in Fig. 1, the sleeve 60 surrounds a part of the top end 44. In a/the first position, as shown in Fig. 2, the sleeve 60 does not surround the part of the top end 44 which is surrounded in the second position.

In Fig. 2, while the sleeve 60 is in the first position, the mechanical member 80 is compressed and the threads 46 and 66 are arranged to hold the sleeve 60 along the lever 40. Rotating the sleeve 60 in that position makes the sleeve 60 move along the lever 40. In contrast, rotating the sleeve in the second position as shown in Fig. 1 does not make the sleeve 60 move along the lever 40.

As can be seen in Fig. 2, the sleeve 60 has two points of contact 61, 62, of which a first point of contact 61 is configured to bear against the mechanical member 80, and of which a second point of contact 62 is configured to stop along the lever 40 on the lever 40 in the direction from the first towards the second position. Thus, the second point of contact 62 is configured to cooperate with the lever.

As a specific feature of the embodiment of Figs. 1 and 2, the second point of contact 62 stops on a stop element 52 provided on the lever 40. In this case, the stop element 52 is provided as a ring mounted on the lever 40.

The first point of contact 61 is arranged in an upper region as a first region 64 of the sleeve 60. The first point of contact 61 is monolithically formed on the sleeve 60. The sleeve 60 is a machined aluminum part.

Here, the mechanical member 80 provides a force to the sleeve 60 based on energy stored in the mechanical member 80. The mechanical member 80 is integrated in the sleeve 60.

Optionally, magnets could be integrated in the carabiner 2 to provide a force to the sleeve 60 in order to avoid involuntary movement of the sleeve 60 with the force directed towards the second position.

The second point of contact 62 is arranged in a lower region as a second region 65 of the sleeve 60. A ring element 68 forms the second point of contact 62. The ring element is inserted into the sleeve.

The second region 65 is facing the pivoting end 24. The first region 64 is facing the engagement end 22 and/or the top end 44. The lever 40 penetrates the sleeve 60 through both of said regions 64 and 65.

Particularly, it may be understood that the first region 64 and/or the second region 65 extend along the sleeve 60 for about at least 1 % and e.g. up to 10% of the length of the sleeve 60 along the lever 40 and starting from and end of the sleeve 60, respectively.

Particularly, the first point of contact 61 runs on the sleeve 60 and for example provides a centering of the sleeve 60.

The first point of contact 61 forms an inner diameter that is at least as large as an outer diameter of the lever 40. Particularly, the inner diameter of the point of contact 61 is at least 1% and particularly up to 10% larger than the outer diameter.

The lever 40 has a shoulder 42 arranged between the lever connection element 46 and the top end 44. The mechanical member 80 is configured to bear against the shoulder 42 and the first point of contact 61 thereby providing the sleeve 60 to be spring-loaded along the lever and towards the second position.

The engagement end 22 has a tapered and chamfered tip. The engagement end 22 is provided with a bulge and/or thickening extending substantially oblique to the lever 40.

The top end 44 has a recess 50 and is configured to surround the engagement end 22 from two opposite sides in the closed position and oblique to the lever. The bulge and/or thickening provides that the top end 44 surrounds the engagement end 22 from another two opposite sides in the closed position and along the lever 40. The recess 50 is tapered and chamfered substantially corresponding to the form of the engagement end 22.

The sleeve 60 has a substantially conical and/or tapered inner surface 70 The surface 70 is configured for surrounding the engagement end 22. Further, the sleeve 60 has a rippling on its outside.

The lever 40 is spring-loaded relative to the frame 20 to automatically pivot from the open towards the closed position, i.e. to automatically close.

The frame 20, the lever 40 and the sleeve 60 are made of an aluminum alloy. The aluminum alloy is in each case anodized to assume corrosive protection and a color.

Fig. 3 shows an embodiment of the present invention quite similar to that of Fig. 1 and 2, wherein the second point of contact 62 stops on a stop element 52 of the lever 40, which stop element 52 is embodied by the lever connection element 46. (Particularly, as a difference to Figs. 1 and 2, there is not a separate stop element 52 provided in the shape of a ring.)

Fig. 4 shows an embodiment of the present invention quite similar to that of Fig. 1 and 2, wherein the sleeve 60 merely has one single point of contact 61 (instead of two points of contact 61, 62 as in Fig. 1). In this respect, the lever 40 is designed differently compared to Fig. 1: The lever 40 of Fig. 4 has an outer protrusion as a point of contact or lever point of contact 48 which is not adopted in Figs. 1-3. The lever point of contact 48 is formed monolithically with the lever 40 itself. The point of contact 61 of the sleeve 60 can stop on the lever point of contact 48. In this case, the lever point of contact 48 of the lever 40 is larger in diameter than the first point of contact 61.

With reference to Fig. 1 and 2, the invention makes possible a method to use a carabiner 2. The method may start when the lever 40 is closed. A first step includes moving the sleeve along the lever 40 towards the pivoting end 24 manually (i.e. by hands), wherein the sleeve connection element 66 comes into contact with the lever connection element 46 in a position of the sleeve 60 between the second position and the first position, wherein the sleeve 60 at least partially surrounds the engagement end 22. The first step typically includes that the mechanical member 80 is being compressed. A second step includes rotating the sleeve on the lever 40 so that the threads 46, 66 engage with each other, which involves rotating the sleeve coherent with the slope of the threads 46, 66. Of course, said steps may overlap in time. By way of further rotating the sleeve 60, the sleeve 60 does not surround the engagement end 22 and/or top end 44 anymore and/or the sleeve 60 may assume the first position. A third thread optionally is pivoting the lever 40 to the open position.

Another method may start when the lever 40 is open and/or when the sleeve 60 is in the first position. In a first optional step, the lever 40 may be brought into the closed position and the sleeve 60 may be brought in the first position, if not already. In a second step, the sleeve 60 may be rotated to leave the first position, wherein the engaging threads 46, 66 provide that the sleeve 60 moves along the lever 40 and towards the top end 44 and/or engagement end 22. In a third step, the engagement between the threads 46, 66 is lost. In the third step the mechanical member 80 pushes and/or moves the sleeve 60 along the lever 40 for the sleeve 60 to automatically assume the second position. Generally, the sleeve is spring-loaded by the mechanical member 80. Lastly, the second position is reached and the sleeve 60 at least partially surrounds the the engagement end 22 and/or top end 44. Thus, the carabiner 2 is secured by way of the invention in an advanced manner.

### Reference signs list

- 2: carabiner
- 4: opening
- 6: distance

- 20: frame
- 22: engagement end
- 24: pivoting end

- 40: lever
- 42: shoulder
- 44: top end
- 46: connection element
- 48: lever point of contact
- 50: recess
- 52: stop element

- 60: sleeve
- 61: point of contact
- 62: point of contact
- 64: first region
- 65: second region
- 66: connection element
- 68: ring element
- 70: surface

- 80: mechanical member

## Claims

1. Carabiner (2), comprising
a frame (20) having an engagement end (22) and a pivoting end (24) therebetween defining an opening (4);
a lever (40) having a top end (44) and a lever connection element (46), the lever (40) pivotably coupled to the pivoting end (24) and configured to be pivoted between an open and a closed position for the engagement end (22) and top end (44) to detachably engage;
a sleeve (60) mounted movably on the lever (40) and having a sleeve connection element (66) corresponding to the lever connection element (46), wherein said connection elements (46, 66) are configured to move the sleeve (60) along the lever (40) sectionally between a first position and a second position, and said connection elements (46, 66) are disengaged in the second position; and
a mechanical member (80) configured for applying a force to the sleeve (60) for avoiding an involuntary movement of the sleeve (60) with the force directed from the first towards the second position;
wherein the sleeve (60) is configured for preventing a pivoting movement of the lever (40) around the pivoting end (24), wherein the sleeve (60) surrounds at least a part of the top end (44) in the second position.

2. Carabiner (2) according to the preceding claim, wherein the sleeve (60) has at least one point of contact (61, 62), of which a first point of contact (61) is configured to bear against the mechanical member (80).

3. Carabiner (2) according to any one of the preceding claims, wherein the sleeve (60) has at least one point of contact (61, 62), of which the first point of contact (61) or a second point of contact (62) is configured to stop along the lever (40) in the direction from the first position to the second position.

4. Carabiner (2) according to any one of the preceding claims, wherein the lever (40) has at least one lever point of contact (48) configured to cooperate with the at least one point of contact (61, 62) of the sleeve (60), especially wherein the lever point of contact (48) is formed in the top end (44) or between the top end (44) and the pivoting end (24).

5. Carabiner (2) according to any one of the preceding claims, wherein the first point of contact (61) is arranged in a first region (64) of the sleeve (60) and/or the second point of contact (62) is arranged in a second region (65) of the sleeve (60).

6. Carabiner (2) according to any one of the preceding claims, wherein the first point of contact (61) is monolithically formed on the sleeve (60).

7. Carabiner (2) according to any one of the preceding claims, wherein the mechanical member (80) is configured to provide a force to the sleeve (60) as a function of gravitation and/or based on energy stored in the mechanical member (80).

8. Carabiner (2) according to any one of the preceding claims, wherein the mechanical member (80) is integrated in the sleeve (60), especially the sleeve (60) and the mechanical member (80) provided as a plastic assembly.

9. Carabiner (2) according to any one of the preceding claims, wherein the sleeve (60) has a ring element (68) to form the at least one point of contact (61, 62).

10. Carabiner (2) according to any one of the preceding claims, wherein lever (40) has a shoulder (42) arranged between the lever connection element (46) and the top end (44) or arranged between the lever connection element (46) and the pivoting end(24), and wherein the mechanical member (80) is configured to bear against the shoulder (42).

11. Carabiner (2) according to any one of the preceding claims, wherein the engagement end (22) has an especially tapered and/or chamfered tip.

12. Carabiner (2) according to any one of the preceding claims, wherein the top end (44) has a recess (50) and is configured to surround the engagement end (22), especially the tip, from at least two especially opposite sides in the closed position.

13. Carabiner (2) according to any one of the preceding claims, wherein the recess (50) is tapered and/or chamfered substantially corresponding to the form of the engagement end (22).

14. Carabiner (2) according to any one of the preceding claims, wherein the sleeve (60) has a substantially conical and/or tapered inner surface (70) and is configured for surrounding the engagement end (22); and/or wherein the sleeve (60) has a rippling on its outside.

15. Carabiner (2) according to any one of the preceding claims, wherein the lever (40) is spring-loaded relative to the frame (20) to automatically pivot from the open towards the closed position, and/or wherein the frame (20), the lever (40) and/or the sleeve (60) is/are made of an aluminum alloy and especially is/are anodized.

## Patentansprüche

1. Karabiner (2), umfassend
einen Rahmen (20) mit einem Eingriffsende (22) und einem Schwenkende (24), die zwischen einander eine Öffnung (4) definieren;
einen Hebel (40) mit einem oberen Ende (44) und einem Hebelverbindungselement (46), wobei der Hebel (40) schwenkbar mit dem Schwenkende (24) gekoppelt und dazu ausgestaltet ist, zwischen einer offenen und einer geschlossenen Position geschwenkt zu werden, damit das Eingriffsende (22) und das obere Ende (44) lösbar in Eingriff kommen; eine Hülse (60), die beweglich am Hebel (40) montiert ist und ein Hülsenverbindungselement (66) aufweist, das dem Hebelverbindungselement (46) entspricht, wobei die Verbindungselemente (46, 66) dazu ausgestaltet sind, die Hülse (60) entlang des Hebels (40) abschnittsweise zwischen einer ersten Position und einer zweiten Position zu bewegen, und die Verbindungselemente (46, 66) in der zweiten Position gelöst sind; und
ein mechanisches Element (80), das dazu ausgestaltet ist, eine Kraft auf die Hülse (60) auszuüben, um eine unbeabsichtigte Bewegung der Hülse (60) zu verhindern, wobei die Kraft von der ersten zur zweiten Position gerichtet ist;
wobei die Hülse (60) dazu ausgestaltet ist, eine Schwenkbewegung des Hebels (40) um das Schwenkende (24) zu verhindern, wobei die Hülse (60) in der zweiten Position mindestens einen Teil des oberen Endes (44) umgibt.

2. Karabiner (2) nach dem vorangehenden Anspruch, wobei die Hülse (60) mindestens einen Kontaktpunkt (61, 62) aufweist, von denen ein erster Kontaktpunkt (61) dazu ausgestaltet ist, an dem mechanischen Element (80) anzuliegen.

3. Karabiner (2) nach einem der vorangehenden Ansprüche, wobei die Hülse (60) mindestens einen Kontaktpunkt (61, 62) aufweist, von denen der erste Kontaktpunkt (61) oder ein zweiter Kontaktpunkt (62) dazu ausgestaltet ist, entlang des Hebels (40) in Richtung von der ersten Position zur zweiten Position anzuhalten.

4. Karabiner (2) nach einem der vorangehenden Ansprüche, wobei der Hebel (40) mindestens einen Hebelkontaktpunkt (48) aufweist, der dazu ausgestaltet ist, mit dem mindestens einen Kontaktpunkt (61, 62) der Hülse (60) zusammenzuwirken, insbesondere wobei der Hebelkontaktpunkt (48) im oberen Ende (44) oder zwischen dem oberen Ende (44) und dem Schwenkende (24) ausgebildet ist.

5. Karabiner (2) nach einem der vorangehenden Ansprüche, wobei der erste Kontaktpunkt (61) in einem ersten Bereich (64) der Hülse (60) und/oder der zweite Kontaktpunkt (62) in einem zweiten Bereich (65) der Hülse (60) angeordnet ist.

6. Karabiner (2) nach einem der vorangehenden Ansprüche, wobei der erste Kontaktpunkt (61) monolithisch an der Hülse (60) ausgebildet ist.

7. Karabiner (2) nach einem der vorangehenden Ansprüche, wobei das mechanische Element (80) dazu ausgestaltet ist, eine Kraft auf die Hülse (60) als Funktion der Schwerkraft und/oder basierend auf der im mechanischen Element (80) gespeicherten Energie auszuüben.

8. Karabiner (2) nach einem der vorangehenden Ansprüche, wobei das mechanische Element (80) in die Hülse (60) integriert ist, wobei insbesondere die Hülse (60) und das mechanische Element (80) als Kunststoffbaugruppe vorgesehen sind.

9. Karabiner (2) nach einem der vorangehenden Ansprüche, wobei die Hülse (60) ein Ringelement (68) aufweist, um den mindestens einen Kontaktpunkt (61, 62) auszubilden.

10. Karabiner (2) nach einem der vorangehenden Ansprüche, wobei der Hebel (40) eine Schulter (42) aufweist, die zwischen dem Hebelverbindungselement (46) und dem oberen Ende (44) oder zwischen dem Hebelverbindungselement (46) und dem Schwenkende (24) angeordnet ist, und wobei das mechanische Element (80) dazu ausgestaltet ist, an der Schulter (42) anzuliegen.

11. Karabiner (2) nach einem der vorangehenden Ansprüche, wobei das Eingriffsende (22) eine besonders verjüngte und/oder abgeschrägte Spitze aufweist.

12. Karabiner (2) nach einem der vorangehenden Ansprüche, wobei das obere Ende (44) eine Aussparung (50) aufweist und dazu ausgestaltet ist, das Eingriffsende (22), insbesondere die Spitze, in der geschlossenen Position von mindestens zwei insbesondere entgegengesetzten Seiten zu umgeben.

13. Karabiner (2) nach einem der vorangehenden Ansprüche, wobei die Aussparung (50) im Wesentlichen entsprechend der Form des Eingriffsendes (22) verjüngt und/oder abgeschrägt ist.

14. Karabiner (2) nach einem der vorangehenden Ansprüche, wobei die Hülse (60) eine im Wesentlichen konische und/oder sich verjüngende Innenfläche (70) aufweist und dazu ausgestaltet ist, das Eingriffsende (22) zu umgeben; und/oder wobei die Hülse (60) an ihrer Außenseite eine Riffelung aufweist.

15. Karabiner (2) nach einem der vorangehenden Ansprüche, wobei der Hebel (40) relativ zum Rahmen (20) federbelastet ist, um automatisch aus der offenen in die geschlossene Position zu schwenken, und/oder wobei der Rahmen (20), der Hebel (40) und/oder die Hülse (60) aus einer Aluminiumlegierung bestehen und insbesondere eloxiert ist/sind.

## Revendications

1. Mousqueton (2), comprenant
un cadre (20) ayant une extrémité de prise (22) et une extrémité pivotante (24) entre ceux-ci définissant une ouverture (4) ;
un levier (40) ayant une extrémité supérieure (44) et un élément d'accouplement de levier (46), le levier (40) étant couplé de manière pivotante à l'extrémité pivotante (24) et conçu pour pivoter entre une position ouverte et une position fermée pour que l'extrémité de prise (22) et l'extrémité supérieure (44) viennent en prise de manière détachable ;
un manchon (60) monté de manière mobile sur le levier (40) et ayant un élément d'accouplement de manchon (66) correspondant à l'élément d'accouplement de levier (46), dans lequel lesdits éléments d'accouplement (46, 66) sont conçus pour déplacer le manchon (60) le long du levier (40) par section entre une première position et une seconde position, et lesdits éléments d'accouplement (46, 66) sont dégagés dans la seconde position ; et
un membre mécanique (80) conçu pour appliquer une force au manchon (60) afin d'éviter un mouvement involontaire du manchon (60) avec la force dirigée depuis la première position vers la seconde position ;
dans lequel le manchon (60) est conçu pour empêcher un mouvement pivotant du levier (40) autour de l'extrémité pivotante (24), dans lequel le manchon (60) entoure au moins une partie de l'extrémité supérieure (44) dans la seconde position.

2. Mousqueton (2) selon la revendication précédente, dans lequel le manchon (60) a au moins un point de contact (61, 62), parmi lesquels un premier point de contact (61) est conçu pour appuyer contre le membre mécanique (80).

3. Mousqueton (2) selon l'une quelconque des revendications précédentes, dans lequel le manchon (60) a au moins un point de contact (61, 62), parmi lesquels le premier point de contact (61) ou un deuxième point de contact (62) est conçu pour s'arrêter le long du levier (40) dans la direction de la première position à la seconde position.

4. Mousqueton (2) selon l'une quelconque des revendications précédentes, dans lequel le levier (40) a au moins un point de contact de levier (48) conçu pour coopérer avec l'au moins un point de contact (61, 62) du manchon (60), spécialement dans lequel le point de contact de levier (48) est formé dans l'extrémité supérieure (44) ou entre l'extrémité supérieure (44) et l'extrémité pivotante (24).

5. Mousqueton (2) selon l'une quelconque des revendications précédentes, dans lequel le premier point de contact (61) est agencé dans une première région (64) du manchon (60) et/ou le deuxième point de contact (62) est agencé dans une seconde région (65) du manchon (60).

6. Mousqueton (2) selon l'une quelconque des revendications précédentes, dans lequel le premier point de contact (61) est formé de manière monolithique sur le manchon (60).

7. Mousqueton (2) selon l'une quelconque des revendications précédentes, dans lequel le membre mécanique (80) est conçu pour fournir une force au manchon (60) en fonction de la gravitation et/ou en se basant sur l'énergie stockée dans le membre mécanique (80).

8. Mousqueton (2) selon l'une quelconque des revendications précédentes, dans lequel le membre mécanique (80) est intégré dans le manchon (60), spécialement le manchon (60) et le membre mécanique (80) fournis en tant qu'ensemble plastique.

9. Mousqueton (2) selon l'une quelconque des revendications précédentes, dans lequel le manchon (60) a un élément annulaire (68) pour former l'au moins un point de contact (61, 62).

10. Mousqueton (2) selon l'une quelconque des revendications précédentes, dans lequel le levier (40) a un épaulement (42) agencé entre l'élément d'accouplement de levier (46) et l'extrémité supérieure (44) ou agencé entre l'élément d'accouplement de levier (46) et l'extrémité pivotante (24), et dans lequel le membre mécanique (80) est conçu pour appuyer contre l'épaulement (42).

11. Mousqueton (2) selon l'une quelconque des revendications précédentes, dans lequel l'extrémité de prise (22) a une pointe spécialement effilée et/ou chanfreinée.

12. Mousqueton (2) selon l'une quelconque des revendications précédentes, dans lequel l'extrémité supérieure (44) a un évidement (50) et est conçue pour entourer l'extrémité de prise (22), spécialement la pointe, d'au moins deux côtés spécialement opposés dans la position fermée.

13. Mousqueton (2) selon l'une quelconque des revendications précédentes, dans lequel l'évidement (50) est effilé et/ou chanfreiné correspondant essentiellement à la forme de l'extrémité de prise (22).

14. Mousqueton (2) selon l'une quelconque des revendications précédentes, dans lequel le manchon (60) a une surface interne essentiellement conique et/ou effilée (70) et est conçu pour entourer l'extrémité de prise (22) ; et/ou dans lequel le manchon (60) a une ondulation sur son extérieur.

15. Mousqueton (2) selon l'une quelconque des revendications précédentes, dans lequel le levier (40) est chargé par ressort par rapport au cadre (20) pour pivoter automatiquement de la position ouverte vers la position fermée, et/ou dans lequel le cadre (20), le levier (40) et/ou le manchon (60) sont fabriqués en un alliage d'aluminium et spécialement sont anodisés.
